(19) **Europäisches Patentamt**
**European Patent Office**
**Office européen des brevets**

(11) **EP 4 667 865 A1**

(12) **EUROPEAN PATENT APPLICATION**
published in accordance with Art. 153(4) EPC

(43) Date of publication:
**24.12.2025 Bulletin 2025/52**

(21) Application number: **23922594.9**

(22) Date of filing: **13.02.2023**

(51) International Patent Classification (IPC):
***G01B 7/30*** (2006.01)

(52) Cooperative Patent Classification (CPC):
**G01D 5/145; G01B 7/30; G01D 3/036;**
**H02K 11/215; H02P 6/16;** H02K 2203/09;
H02K 2211/03

(86) International application number:
**PCT/JP2023/004779**

(87) International publication number:
**WO 2024/171253 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **JTEKT Corporation**
**Kariya-shi, Aichi 448-8652 (JP)**

(72) Inventors:
• **ITO Kazuhiko**
**Kariya-shi, Aichi 448-8652 (JP)**

• **NATSUME Yusuke**
**Kariya-shi, Aichi 448-8652 (JP)**
• **MIKAMO Satoru**
**Kariya-shi, Aichi 448-8652 (JP)**
• **SUZUKI Hiroshi**
**Kariya-shi, Aichi 448-8652 (JP)**
• **KATAYAMA Yoshitaka**
**Kariya-shi, Aichi 448-8652 (JP)**

(74) Representative: **Winter, Brandl - Partnerschaft**
**mbB**
**Alois-Steinecker-Straße 22**
**85354 Freising (DE)**

(54) **ROTATION ANGLE DETECTION DEVICE**

(57)     A rotation angle detection device detects a rotation angle (θ) of a motor (20) including an output shaft (23). The rotation angle detection device includes a magnet (31), a magnetic sensor (32), a processing circuit (42), a circuit board (26), and a terminal (25b, 25c). The magnet is fixed to an end of the output shaft. The magnetic sensor is provided so as to face the magnet in the axial direction of the output shaft, and generates an electrical signal according to a change in a magnetic field caused by rotation of the magnet. The processing circuit computes the rotation angle of the motor based on the electrical signal generated by the magnetic sensor, and controls power supply to the motor according to the computed rotation angle of the motor. The magnetic sensor and the processing circuit are mounted on the circuit board. The terminal supplies electric power to the circuit board. The processing circuit computes, as a correction angle (θr) for the rotation angle of the motor, an angular error (δ) caused by magnetic flux disturbance generated from the terminal when the electric power is supplied to the circuit board via the terminal, and corrects the rotation angle of the motor by using the computed correction angle.

Fig.3

**Description**

TECHNICAL FIELD

The present disclosure relates to rotation angle detection devices.

BACKGROUND ART

The rotation angle detection device of Patent Document 1 includes a magnet, a magnetic sensor, a control circuit, and a circuit board. The magnetic sensor and the control circuit are mounted on the circuit board. The circuit board is connected to coils of a motor via a busbar. The magnet is fixed to an end of an output shaft of the motor. The magnetic sensor is disposed so as to face the magnet in an axial direction, and generates an electrical signal according to a change in the magnetic field caused by rotation of the magnet. The control circuit computes, based on the electrical signal generated by the magnetic sensor, the rotation angle of the output shaft as the rotation angle of the motor, and controls power supply to the coils of the motor according to the rotation angle of the motor.

The control circuit converts the values of the phase currents supplied to the coils to a d-axis current value and a q-axis current value in a d/q coordinate system. The control device performs current feedback to make the d-axis current value and the q-axis current value follow their target values. The control circuit uses the d-axis current value and the q-axis current value to compute an error angle caused by magnetic flux disturbance generated from the busbar or the coils as a correction angle for the rotation angle of the motor. The control circuit corrects the rotation angle of the motor by using the correction angle.

Related Art Documents

Patent Documents

Patent Document 1: Japanese Unexamined Patent Application Publication No. 2017-143603 (JP 2017-143603 A)

SUMMARY OF THE INVENTION

Problem to be Solved by the Invention

For example, direct current power is supplied from an external direct current power supply to the circuit board via a power terminal. Depending on the distance between the power terminal and the magnetic sensor, magnetic flux disturbance generated by a power supply current supplied to the circuit board may affect the magnetic sensor. When the disturbing magnetic field is applied to the magnetic sensor, an error may occur between the rotation angle of the motor detected through the magnetic sensor and the actual rotation angle of the motor.

Means for Solving the Problem

A rotation angle detection device according to one aspect of the present disclosure is configured to detect a rotation angle of a motor including an output shaft. The rotation angle detection device includes: a magnet fixed to an end of the output shaft; a magnetic sensor provided so as to face the magnet in an axial direction of the output shaft and configured to generate an electrical signal according to a change in a magnetic field caused by rotation of the magnet; a processing circuit configured to compute the rotation angle of the motor based on the electrical signal, and to control power supply to the motor according to the computed rotation angle of the motor; a circuit board on which the magnetic sensor and the processing circuit are mounted; and a terminal configured to supply electric power to the circuit board. The processing circuit is configured to compute, as a correction angle for the rotation angle of the motor, an angular error caused by magnetic flux disturbance generated from the terminal when the electric power is supplied to the circuit board via the terminal, and to correct the rotation angle of the motor by using the computed correction angle.

BRIEF DESCRIPTION OF THE DRAWINGS

[FIG. 1] FIG. 1 is a sectional view of a motor device in which an embodiment of a rotation angle detection device is mounted.

[FIG. 2] FIG. 2 is a perspective view of a detection unit in FIG. 1.

[FIG. 3] FIG. 3 is a block diagram showing the configuration of a control circuit in FIG. 1.

[FIG. 4] FIG. 4 is a bottom view showing a first layout of a circuit board in FIG. 1.

[FIG. 5] FIG. 5 is a bottom view showing a second layout of the circuit board in FIG. 1.

[FIG. 6] FIG. 6 is a waveform diagram of an angular error included in the rotation angle of a motor in FIG. 1.

[FIG. 7] FIG. 7 is a graph showing a map that is used by the control circuit in FIG. 1.

[FIG. 8] FIG. 8 is a block diagram showing a map according to another embodiment.

[FIG. 9] FIG. 9 is a graph showing the relationship between the angular velocity of a motor and a correction angle according to another embodiment.

MODES FOR CARRYING OUT THE INVENTION

A rotation angle detection device according to an embodiment will be described. The rotation angle detection device is mounted in, for example, a motor device.

<Motor Device 10>

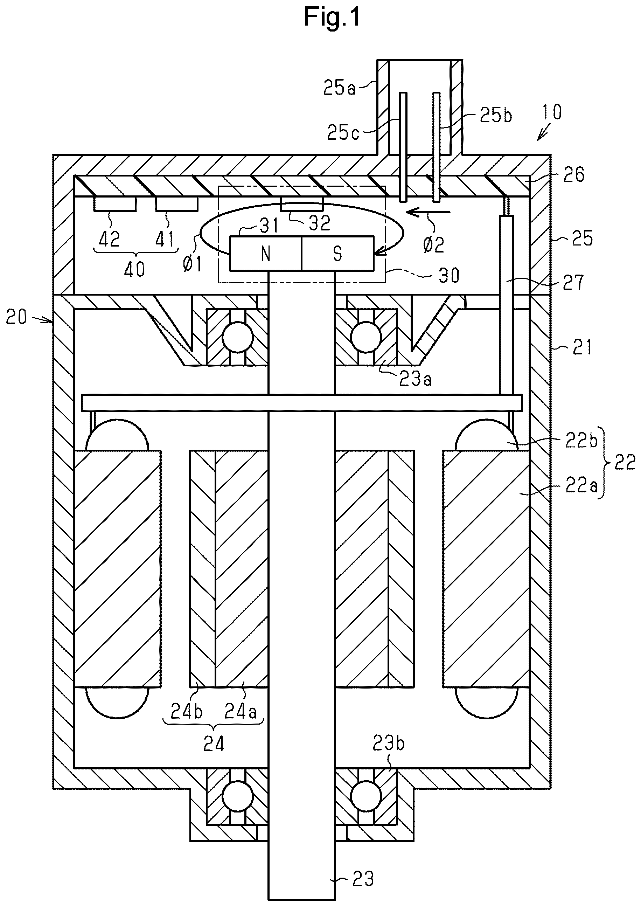

As shown in FIG. 1, a motor device 10 includes a motor 20, a detection unit 30, and a control circuit 40.

The motor 20 is a three-phase brushless motor. The three phases include a U-phase, a V-phase, and a W-phase. The motor 20 includes a housing 21. The housing 21 has, for example, a tubular shape with a circular cross-section. A first end of the housing 21 and a second end of the housing 21 are each closed by an end wall. The first end and the second end are located on opposite sides in an axial direction.

The motor 20 includes a stator 22. The stator 22 includes a stator core 22a and a stator coil 22b. The stator core 22a has a tubular shape with a circular cross-section. The outer peripheral surface of the stator core 22a is fitted and fixed to the inner peripheral surface of the housing 21. The stator coil 22b includes coils corresponding to each of the three phases. The stator coil 22b is provided on the stator core 22a. The stator core 22a includes a plurality of teeth, and the stator coil 22b is wound around each of the teeth.

The motor 20 includes an output shaft 23. The output shaft 23 is rotatably supported relative to the inner peripheral surface of the housing 21 via a first bearing 23a and a second bearing 23b. First and second ends of the output shaft 23 each pass through the housing 21 in the axial direction. The second end of the output shaft 23 is coupled to a mechanical load via, for example, a reduction gear.

The motor 20 includes a rotor 24. The rotor 24 is disposed inside the stator 22. The rotor 24 includes a rotor core 24a and a permanent magnet 24b. The rotor core 24a has a tubular shape with a circular cross-section. The inner peripheral surface of the rotor core 24a is fixed to the outer peripheral surface of the output shaft 23. The permanent magnet 24b has a tubular shape with a circular cross-section. The inner peripheral surface of the permanent magnet 24b is fixed to the outer peripheral surface of the rotor core 24a. The permanent magnet 24b is a multipole magnet in which a plurality of magnetic poles of different polarities, namely N-poles and S-poles, are alternately magnetized in a circumferential direction. The permanent magnet 24b has, for example, five pairs of magnetic poles, each pair including a positive pole and a negative pole, that is, a total of 10 magnetic poles.

The motor 20 includes a cover 25. The cover 25 has, for example, a tubular shape with a circular cross-section. A first end of the cover 25 is closed by an end wall. A second end of the cover 25 is open in the axial direction. The second end is the opposite end of the cover 25 from the first end. The second end of the cover 25 is fixed to the first end of the housing 21. The interior of the cover 25 and the interior of the housing 21 communicate with each other.

The cover 25 includes a connector mating portion 25a. The connector mating portion 25a has, for example, a tubular shape with a quadrilateral cross-section. The connector mating portion 25a protrudes in the axial direction from the outer surface of the end wall of the cover 25. The opposite end of the connector mating portion 25a from the end wall of the cover 25 is open in the axial direction. A power terminal 25b and a ground terminal 25c are provided inside the connector mating portion 25a.

The power terminal 25b and the ground terminal 25c pass through the end wall of the cover 25 in the axial direction. A first end of the power terminal 25b and a first end of the ground terminal 25c are located inside the connector mating portion 25a. A second end of the power terminal 25b and a second end of the ground terminal 25c are located inside the cover 25. A power plug that is a mating component is mated with the connector mating portion 25a. The power plug is provided at a first end of a power line. A second end of the power line is connected to, for example, a direct current power supply. The direct current power supply is an external power supply and is, for example, a battery.

The motor 20 includes a circuit board 26. The circuit board 26 is attached inside the cover 25. The circuit board 26 is in the form of a flat plate that extends in a direction perpendicular to the axial direction. The second end of the power terminal 25b and the second end of the ground terminal 25c are connected to the circuit board 26 by, for example, soldering. Direct current power from the direct current power supply is supplied to the circuit board 26 via the power terminal 25b and the ground terminal 25c. The circuit board 26 includes part of the components of the detection unit 30, and the control circuit 40.

The detection unit 30 includes a bias magnet 31. The bias magnet 31 has a columnar shape with a circular cross-section. The bias magnet 31 is fixed to the first end of the output shaft 23 via, for example, a holder made of resin. The bias magnet 31 is a so-called two-pole magnet. One half of the bias magnet 31 in a radial direction is magnetized as an N-pole, and the other half is magnetized to an S-pole.

The detection unit 30 includes a magnetic sensor 32. The magnetic sensor 32 is, for example, an MR sensor (Magneto Resistive Sensor). The magnetic sensor 32 is mounted on the circuit board 26. The magnetic sensor 32 faces the bias magnet 31 in the axial direction. The magnetic sensor 32 generates an electrical signal corresponding to the rotation angle of the output shaft 23, that is, the rotation angle of the motor 20.

The control circuit 40 includes an inverter 41. The inverter 41 is connected to the stator coil 22b of each of the three phases via a busbar 27. The busbar 27 includes a U-phase busbar, a V-phase busbar, and a W-phase busbar. The inverter 41 includes three arms corresponding to the three phases. The arm includes two switching devices. The two switching devices are connected in series. The switching devices are FETs (Field Effect Transistors). The three arms are connected in parallel. The direct current power from the direct current power supply is converted to three-phase alternating current power by the switching operations of each switching device based on switching commands. The alternating current power is supplied to the stator coil 22b of each of the three phases via the busbar 27.

The control circuit 40 includes a microcomputer 42. The microcomputer 42 includes a processing circuit including any one of the following three configurations (a), (b), (c).

a. One or more processors that operate according to a computer program that is software. The processor includes a CPU (Central Processing Unit) and a memory.

b. One or more dedicated hardware circuits, such as an application-specific integrated circuit (ASIC), that perform at least part of various processes. The ASIC includes a CPU and a memory.

c. A hardware circuit combining the configuration (a), (b).

The memory is a computer-readable medium and stores programs that describe processes or instructions for the computer. In the present embodiment, the computer is a CPU. The memory includes a RAM (Random Access Memory) and a ROM (Read Only Memory). The CPU performs various types of control by executing the programs stored in the memory at a predetermined computation cycle.

The microcomputer 42 computes, for example, a current command value corresponding to target torque supplied from the outside. The microcomputer 42 performs feedback control of the current such that the value of the current actually supplied to the motor 20 follows the current command value. The microcomputer 42 computes the deviation between the current command value and the actual current value, and generates a switching command for the inverter 41 so as to eliminate the computed deviation. The switching command specifies the on-duty cycle of each switching device of the inverter 41. A current is supplied from the inverter 41 to the motor 20 according to the switching command. The motor 20 thus generates a rotational force according to the target torque.

The power terminal 25b, the ground terminal 25c, the circuit board 26, the permanent magnet 31, the magnetic sensor 32, and the microcomputer 42 constitute a rotation angle detection device. The microcomputer 42 corresponds to a processing circuit.

<Detection Unit 30>

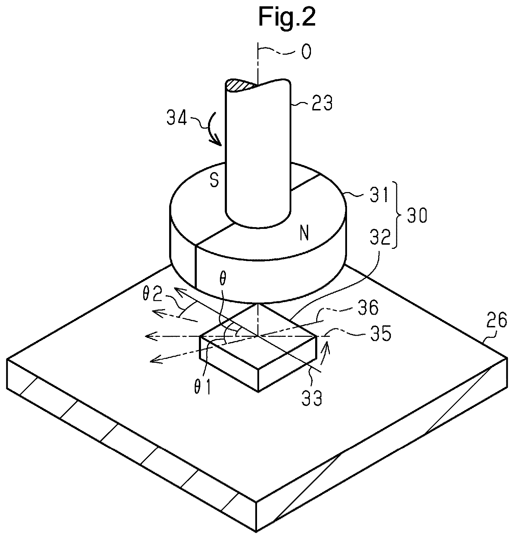

Next, the configuration of the detection unit 30 will be described in detail. As shown in FIG. 2, the bias magnet 31 applies a magnetic field to the magnetic sensor 32 in a first magnetic field direction 33 indicated by a continuous line with an arrowhead. The first magnetic field direction 33 is a direction from the N-pole to the S-pole of the bias magnet 31. For example, when the output shaft 23 rotates by a rotation angle $\theta$ in a rotational direction 34 indicated by a continuous line with an arrowhead from the position shown in FIG. 2, the bias magnet 31 also rotates by the rotation angle $\theta$ in the rotational direction 34. As a result, the direction of the bias magnetic field applied to the magnetic sensor 32 rotates by the rotation angle $\theta$ around the axis O of the output shaft 23. The direction of the bias magnetic field applied to the magnetic sensor 32 thus changes from the first magnetic field direction 33 indicated by the continuous line with an arrowhead to a second magnetic field direction 35 indicated by a long dashed short dashed line with an arrowhead. In this way, the direction of the magnetic field applied to the magnetic sensor 32 changes according to the rotation angle of the output shaft 23.

The magnetic sensor 32 generates a first electrical signal and a second electrical signal according to the direction of the bias magnetic field applied from the bias magnet 31. More specifically, the magnetic sensor 32 has a bridge circuit in which four magneto-resistive elements are connected in a bridge configuration. The two midpoint potentials of the bridge circuit are input to the microcomputer 42 as the first electrical signal and the second electrical signal. When the bias magnet 31 rotates and the direction of the bias magnetic field applied to each magneto-resistive element changes, the resistance value of each magneto-resistive element changes according to the change in the direction of the bias magnetic field. As the resistance value of each magneto-resistive element changes, the first electrical signal and the second electrical signal each change accordingly. That is, the first electrical signal and the second electrical signal each change according to the rotation angle of the output shaft 23.

By, for example, adjusting the arrangement of the magneto-resistive elements, the first electrical signal and the second electrical signal become signals that change as follows. That is, the first electrical signal is a sine signal that changes sinusoidally according to the rotation angle of the output shaft 23. The second electrical signal is a cosine signal that is phase-shifted by 90° with respect to the first electrical signal. The microcomputer 42 receives the first electrical signal and the second electrical signal generated by the magnetic sensor 32, and computes the rotation angle of the output shaft 23 as the rotation angle of the motor 20, based on the received first electrical signal and second electrical signal.

<Microcomputer 42>

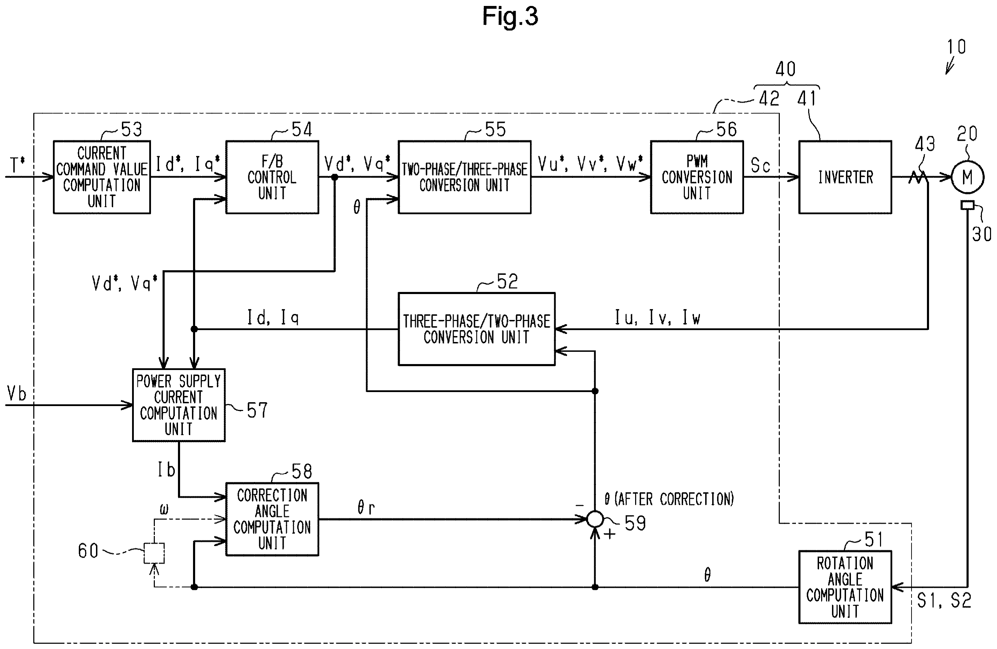

Next, the configuration of the microcomputer 42 will be described. As shown in FIG. 3, the microcomputer 42 includes a rotation angle computation unit 51, a three-phase/two-phase conversion unit 52, a current command value computation unit 53, a feedback control unit 54, a two-phase/three-phase conversion unit 55, and a PWM conversion unit 56. Each unit of the microcomputer shown in FIG. 3 is a functional unit implemented by the CPU executing a control program. In FIG. 3, feedback is abbreviated as "F/B."

The rotation angle computation unit 51 receives, at a predetermined sampling cycle, a first electrical signal S1 and a second electrical signal S2 generated by the magnetic sensor 32. The rotation angle computation unit 51 computes the rotation angle of the output shaft 23 as the rotation angle $\theta$ of the motor 20, based on the first electrical signal S1 and the second electrical signal S2. The rotation angle computation unit 51 detects the rotation angle of the output shaft 23, that is, the rotation angle $\theta$ of the motor 20, by computing an arctangent value (arctan) based on the first electrical signal S1 that is a sine signal and the second electrical signal S2 that is a cosine signal, as represented by the following Equation (1). In Equation (1), "/" represents division.

$$\theta = \text{arctan}(S1/S2) \ldots (1)$$

The three-phase/two-phase conversion unit 52 detects current values Iu, Iv, Iw of the three phases via a current sensor 43 provided in a power supply path between the inverter 41 and the motor 20. The current values Iu, Iv, Iw are the values of the phase currents each supplied to the stator coil 22b of a corresponding one of the three phases. The three-phase/two-phase conversion unit 52 uses the rotation angle $\theta$ of the motor 20 computed by the rotation angle computation unit 51 to convert the current values Iu, Iv, Iw of the three phases to two-phase vector components, that is, a d-axis current value Id and a q-axis current value Iq in a d/q coordinate system. The d/q coordinate system is a coordinate system that rotates according to the rotation angle $\theta$ of the motor 20, and the d-axis current value Id and the q-axis current value Iq are the values of the currents actually supplied to the motor 20 in the d/q coordinate system.

The current command value computation unit 53 computes a d-axis current command value Id* and a q-axis current command value Iq* based on, for example, target torque T* received from the outside. The d-axis current command value Id* and the q-axis current command value Iq* are target values of the currents to be supplied to the motor 20 in the d/q coordinate system.

The feedback control unit 54 receives the d-axis current command value Id* and the q-axis current command value Iq* generated by the current command value computation unit 53. The feedback control unit 54 receives the d-axis current value Id and the q-axis current value Iq generated by the three-phase/two-phase conversion unit 52. The feedback control unit 54 calculates the d-axis current deviation by subtracting the d-axis current value Id from the d-axis current command value Id*. The feedback control unit 54 calculates the q-axis current deviation by subtracting the q-axis current value Iq from the q-axis current command value Iq*. The feedback control unit 54 generates a d-axis voltage command value Vd* by performing current feedback control based on the d-axis current deviation such that the d-axis current value Id follows the d-axis current command value Id*. The feedback control unit 54 generates a q-axis voltage command value Vq* by performing current feedback control based on the q-axis current deviation such that the q-axis current value Iq follows the q-axis current command value Iq*.

The two-phase/three-phase conversion unit 55 receives the d-axis voltage command value Vd* and the q-axis voltage command value Vq* generated by the feedback control unit 54. The two-phase/three-phase conversion unit 55 uses the rotation angle θ of the motor 20 computed by the rotation angle computation unit 51 to convert the d-axis voltage command value Vd* and the q-axis voltage command value Vq* to voltage command values Vu*, Vv*, Vw* of the three phases in a three-phase coordinate system.

The PWM conversion unit 56 receives the voltage command values Vu*, Vv*, Vw* of the three phases generated by the two-phase/three-phase conversion unit 55. The PWM conversion unit 56 generates duty command values of the three phases corresponding to the voltage command values Vu*, Vv*, Vw* of the three phases. The PWM conversion unit 56 generates a switching command Sc for each switching device of the inverter 41 based on the duty command value.

Each switching device of the inverter 41 performs a switching operation according to the switching command Sc. As a result, a three-phase alternating current needed to cause the motor 20 to generate the target torque T* is supplied to the motor 20, more specifically, to the motor coil 22b of each of the three phases. The three-phase alternating current changes sinusoidally with time.

<Influence of Magnetic Flux Disturbance>

Next, the influence of magnetic flux disturbance will be described. The detection unit 30 uses the magnetic sensor 32. Therefore, there is the following concern. That is, direct current power is supplied from an external direct current power supply to the circuit board 26 via the power terminal 25b and the ground terminal 25c. When a current flows through the power terminal 25b and the ground terminal 25c, leakage magnetic flux is generated around the power terminal 25b and around the ground terminal 25c. The leakage magnetic flux is generated in proportion to the current flowing through the power terminal 25b or the current flowing through the ground terminal 25c. Depending on the distance between the power terminal 25b and the magnetic sensor 32 or the distance between the ground terminal 25c and the magnetic sensor 32, the leakage magnetic flux may affect the magnetic sensor 32 as magnetic flux disturbance.

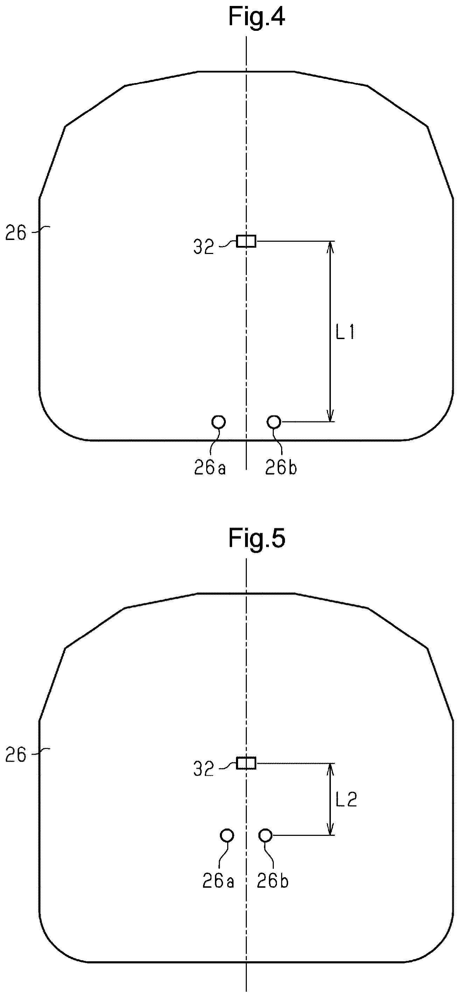

The degree of influence that the magnetic flux disturbance has on the magnetic sensor 32 depends on the layout of the circuit board 26. The layout of the circuit board 26 includes, for example, a first layout and a second layout. The first layout is as follows. That is, as shown in FIG. 4, the magnetic sensor 32 is disposed near the center of the circuit board 26 when viewed from a direction perpendicular to the circuit board 26. The magnetic sensor 32 is disposed on the center line O1 of the circuit board 26 when viewed from a direction perpendicular to the circuit board 26. The center line O1 is a straight line passing through the center of the circuit board 26 when viewed from a direction perpendicular to the circuit board 26. The circuit board 26 includes a power terminal connection portion 26a and a ground terminal connection portion 26b. The power terminal connection portion 26a is a portion of the circuit board 26 to which the power terminal 25b is connected. The ground terminal connection portion 26b is a portion of the circuit board 26 to which the ground terminal 25c is connected. The power terminal connection portion 26a and the ground terminal connection portion 26b are disposed in the periphery of the circuit board 26. The power terminal connection portion 26a and the ground terminal connection portion 26b are arranged symmetrically with respect to the center line O1. In a direction along the center line O1, the distance between the power terminal connection portion 26a and the magnetic sensor 32 and the distance between the ground terminal connection portion 26b and the magnetic sensor 32 are a first distance L1.

The second layout is as follows. That is, as shown in FIG. 5, the magnetic sensor 32 is disposed near the center of the circuit board 26 when viewed from a direction perpendicular to the circuit board 26. The magnetic sensor 32 is disposed on the center line O1 of the circuit board 26 when viewed from a direction perpendicular to the circuit board 26. The circuit board 26 includes a power terminal connection portion 26a and a ground terminal connection portion 26b. The power terminal connection portion 26a and the ground terminal connection portion 26b are disposed near the center of the circuit board 26. The power terminal connection portion 26a and the ground terminal connection portion 26b are arranged symmetrically with respect to the center line O1. In a direction along the center line O1, the distance between the power terminal connection portion 26a and the magnetic sensor 32 and the distance between the ground terminal connection portion 26b and the magnetic sensor 32 are a second distance L2. The second distance L2 is shorter than the first distance L1.

When the first layout and the second layout are compared, the magnetic sensor 32 is more susceptible to the leakage magnetic flux generated around the power terminal 25b and the ground terminal 25c in the second layout. The shorter the distance between the power terminal connection portion 26a and the magnetic sensor 32 and the distance between the ground terminal connection portion 26b and the magnetic sensor 32, the more the magnetic sensor 32 is affected by the leakage magnetic flux.

As shown in FIG. 1, for example, in addition to first magnetic flux φ1 generated by the bias magnet 31, second magnetic flux φ2 generated by the power terminal 25b or the ground terminal 25c may be applied to the magnetic sensor 32 as magnetic flux disturbance. Moreover, the magnetic field of the bias magnet 31 may be distorted due to the second magnetic flux φ2 interfering with the first magnetic flux φ1. Therefore, there is a concern that an error may occur between the rotation angle of the motor 20 detected through the magnetic sensor 32 and the actual rotation angle.

Since the positional relationship between the power terminal 25b and the magnetic sensor 32 and the positional relationship between the ground terminal 25c and the magnetic sensor 32 do not change, the direction of the second magnetic flux φ2 is fixed. As shown in FIG. 2, for example, when the output shaft 23 rotates by the rotation angle θ in the rotational direction 34 from the position in FIG. 2, the direction of the bias magnetic field applied to the magnetic sensor 32 is supposed to change from the first magnetic field direction 33 to the second magnetic field direction 35. However, when the magnetic sensor 32 or the first magnetic flux φ1 from the bias magnet 31 is affected by the second magnetic flux φ2 from the power terminal 25b or the ground terminal 25c, the direction of the bias magnetic field applied to the magnetic sensor 32 may not change to the second magnetic field direction 35 as it is supposed to.

For example, the direction of the bias magnetic field changes to a third magnetic field direction 36 indicated by a long dashed double-short dashed line with an arrowhead, rather than changing to the second magnetic field direction 35 as it is supposed to. The third magnetic field direction 36 may be a direction rotated from the first magnetic field direction 33 by a first rotation angle θ1 that is greater than the rotation angle θ, or may be a direction rotated from the first magnetic field direction 33 by a second rotation angle θ2 that is smaller than the rotation angle θ.

In this case, the magnetic sensor 32 generates an electrical signal according to the third magnetic field direction 36. Based on the electrical signal according to the third magnetic field direction 36, the microcomputer 42 erroneously computes the rotation angle of the output shaft 23, that is, the rotation angle θ of the motor 20, as the first rotation angle θ1 or the second rotation angle θ2.

The first rotation angle θ1 includes a first angular error δ1 with respect to the actual rotation angle θ, as represented by the following Equation (2). The second rotation angle θ2 includes a second angular error δ2 with respect to the actual rotation angle θ, as represented by the following Equation (3).

$$\delta1 = \theta - \theta1 \ldots (2)$$

$$\delta2 = \theta - \theta2 \ldots (3)$$

When the control of the motor 20 is performed based on the first rotation angle θ1 including the first angular error δ1 or the second rotation angle θ2 including the second angular error δ2, torque ripple, for example, may occur.

<Configuration for Reducing Influence of Magnetic Flux Disturbance>

In the present embodiment, the following configuration is adopted as the microcomputer 42 in order to reduce the influence that the second magnetic flux φ2 as magnetic flux disturbance has on the magnetic sensor 32.

As shown in FIG. 3, the microcomputer 42 includes a power supply current computation unit 57, a correction angle computation unit 58, and a subtractor 59. The power supply current computation unit 57 computes a power supply current Ib. The power supply current Ib is a current supplied from the direct current power supply to the circuit board 26 via the power terminal 25b and the ground terminal 25c. The power supply current computation unit 57 receives a power supply voltage Vb. The power supply voltage Vb is the voltage of the direct current power supply and is detected through, for example, a voltage sensor. The power supply current computation unit 57 receives the d-axis voltage command value Vd* and the q-axis voltage command value Vq* computed by the feedback control unit 54. The power supply current computation unit 57 receives the d-axis current value Id and the q-axis current value Iq computed by the three-phase/two-phase conversion unit 52.

The power supply current computation unit 57 computes the power supply current Ib based on, for example, the following Equation (4). In Equation (4), "." represents multiplication and "/" represents division.

$$Ib = (Vd^{*} \cdot Id + Vq^{*} \cdot Iq)/Vb \ldots (4)$$

The correction angle computation unit 58 receives the rotation angle θ computed by the rotation angle computation unit 51 and the power supply current **Ib** computed by the power supply current computation unit 57. The correction angle computation unit 58 computes a correction angle θr based on the received rotation angle θ and power supply current Ib. The correction angle θr is an angle corresponding to the first angular error δ1 or the second angular error δ2 caused by the influence of the magnetic flux disturbance. The first angular error δ1 and the second angular error δ2 will be collectively referred to as angular error δ.

The angular error δ can be approximately described by, for example, a sine function. The correction angle computation unit 58 computes the error angle δ as the correction angle θr for the rotation angle θ detected through the magnetic sensor 32.

The correction angle computation unit 58 computes the correction angle θr based on, for example, the following Equation (5). In Equation (5), "." represents multiplication.

$$\theta r = A_1 \cdot \sin(\theta + \theta_{M1}) \ldots (5)$$

In this equation, "$A_1$" is an error amplitude. The error amplitude $A_1$ is a variable determined by the magnitude of the current supplied to the circuit board 26, that is, the power supply current Ib, and "$\theta$" is the rotation angle detected through the magnetic sensor 32. The rotation angle is a mechanical angle.

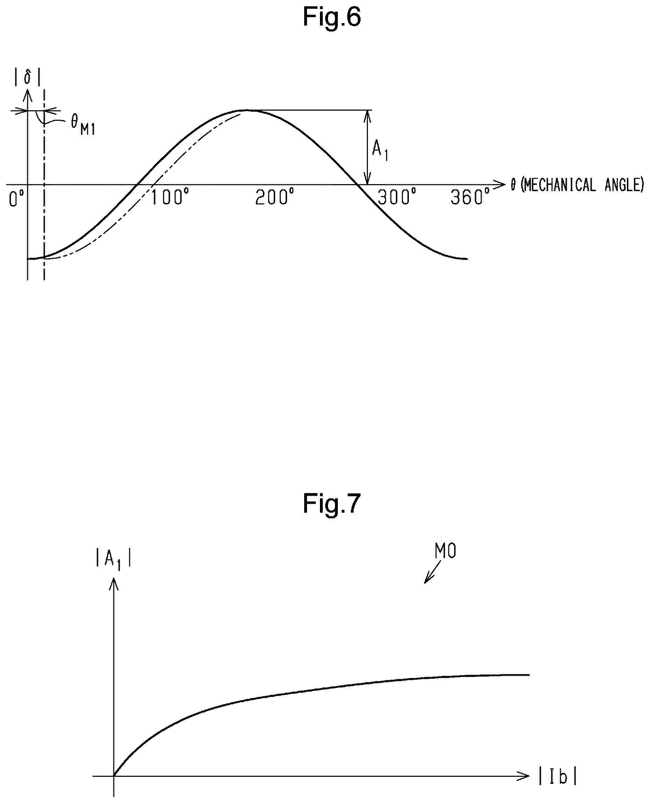

As shown in the graph of FIG. 6, "$\theta_{M1}$" is the amount of phase shift with respect to the rotation angle $\theta$, that is, a phase error. When the waveform of the electrical signal generated by the magnetic sensor 32, that is, the waveform of a sine signal or a cosine signal, is used as a reference waveform, the amount of phase shift of the angular error $\delta$ with respect to the reference waveform is the phase error $\theta_{M1}$. The phase error $\theta_{M1}$ is a constant that is uniquely determined by the structure of the motor 20, and is stored in a storage device such as a memory.

The correction angle computation unit 58 computes the error amplitude $A_1$ according to the power supply current Ib. The correction angle computation unit 58 computes the error amplitude $A_1$ by using, for example, a map M0. The map M0 is stored in a storage device such as a memory.

As shown in the graph of FIG. 7, the map M0 defines the relationship between the power supply current Ib and the error amplitude $A_1$. The map M0 has, for example, the following characteristics. That is, as the absolute value of the power supply current Ib increases, the absolute value of the error amplitude $A_1$ increases. However, as the absolute value of the power supply current Ib increases, the slope, namely the ratio of the amount of increase in the absolute value of the error amplitude $A_1$ to the amount of increase in the absolute value of the power supply current Ib, gradually decreases.

The subtractor 59 computes a final rotation angle $\theta$ by subtracting the correction angle $\theta r$ computed by the correction angle computation unit 58 from the rotation angle $\theta$ computed by the rotation angle computation unit 51, as represented by the following Equation (6). The final rotation angle $\theta$ is the rotation angle $\theta$ corrected using the correction angle $\theta r$.

$$\theta \text{ (after correction)} = \theta - \theta r \ldots (6)$$

The correction angle $\theta r$ is also the error angle $\delta$ caused by the influence of the magnetic flux disturbance. Therefore, the angular error included in the detected rotation angle $\theta$ is removed by subtracting the correction angle $\theta r$ from the rotation angle $\theta$ detected through the magnetic sensor 32.

The error angle $\delta$ is either a positive value or a negative value. That is, as represented by the following Equation (7), due to the influence of the magnetic flux disturbance, the rotation angle $\theta$ detected through the magnetic sensor 32 may be smaller by an amount equal to the absolute value of the error angle $\delta$ than an ideal rotation angle $\theta z$ that does not include the angular error $\delta$. Moreover, as represented by the following Equation (8), due to the influence of the magnetic flux disturbance, the rotation angle $\theta$ detected through the magnetic sensor 32 may be larger by an amount equal to the absolute value of the error angle $\delta$ than the ideal rotation angle $\theta z$ that does not include the angular error $\delta$.

$$\theta = (\theta z - \delta) \ldots (7)$$

$$\theta = (\theta z + \delta) \ldots (8)$$

As represented by the following Equations (9), (10), the corrected rotation angle $\theta$ based on Equation (6) is theoretically the ideal rotation angle $\theta z$ that does not include the angular error $\delta$.

$$\theta \text{ (after correction)} = \theta - \theta r = (\theta z - \delta) - (-\delta) = \theta z \ldots (9)$$

$$\theta \text{ (after correction)} = \theta - \theta r = (\theta z + \delta) - (\delta) = \theta z \ldots (10)$$

<Effects of Embodiment>

The present embodiment has the following effects.

(1) The microcomputer 42 computes the error angle $\delta$ caused by the magnetic flux disturbance as the correction angle $\theta r$. The microcomputer 42 subtracts the correction angle $\theta r$ from the rotation angle $\theta$ detected through the magnetic sensor 32. Since the error angle $\delta$ is thus removed from the detected value of the rotation angle $\theta$ that includes the error angle $\delta$, a more accurate rotation angle $\theta$ can be obtained. Since the microcomputer 42 performs the control of the motor 20 based on the more accurate rotation angle $\theta$, the occurrence of torque ripple due to the angular error $\delta$ that occurs periodically can be reduced.

(2) The microcomputer 42 computes the correction angle $\theta r$ by utilizing the fact that the angular error $\delta$ can be described by a sine function. Specifically, the microcomputer 42 computes the correction angle $\theta r$ based on Equation (5). The correction angle $\theta r$ can be more easily computed by using Equation (5).

(3) The phase error $\theta_{M1}$ is the amount of phase shift determined by the structure of the motor 20, and is a constant. Therefore, when Equation (5) is used, the correction angle $\theta r$ can be calculated if the error amplitude $A_1$ is known.

(4) The microcomputer 42 computes the error amplitude $A_1$ by using the map M0 that defines the relationship between the power supply current Ib supplied to the circuit board 26 and the error amplitude $A_1$. The error amplitude $A_1$ can be more easily calculated by using the map M0.

(5) The microcomputer 42 computes the power supply current Ib based on Equation (4). The power supply current Ib can be more easily computed by using Equation (4).

(6) The microcomputer 42 corrects the rotation angle $\theta$ on the assumption that the rotation angle $\theta$ is affected by the magnetic flux disturbance. This allows the distance between the power terminal 25b and the magnetic sensor 32 and the distance between the ground terminal 25c and the magnetic sensor 32 to be reduced. Therefore, the design flexibility regarding the distance between the power terminal 25b and the magnetic sensor 32 and the distance between the ground terminal 25c and the magnetic sensor 32 is improved. Additionally, the design flexibility regarding the positional relationship between the power terminal 25b and the magnetic sensor 32 and the positional relationship between the ground terminal 25c and the magnetic sensor 32 is improved. The flexibility in the layout of the circuit board 26 is thus improved.

<Other Embodiments>

The present embodiment may be modified as follows.

-    The microcomputer 42 may change the correction angle $\theta r$ according to the angular velocity of the motor 20. In this case, a differentiator 60 is provided in the microcomputer 42, as shown in FIG. 3. The differentiator 60 computes the angular velocity $\omega$ of the motor 20 by differentiating the rotation angle $\theta$ computed by the rotation angle computation unit 51 with respect to time.

The map M0 may include, for example, a plurality of maps for computing the error amplitude $A_1$ according to the angular velocity $\omega$ of the motor 20. The microcomputer 42 switches between the maps to be used according to the angular velocity $\omega$ of the motor 20.

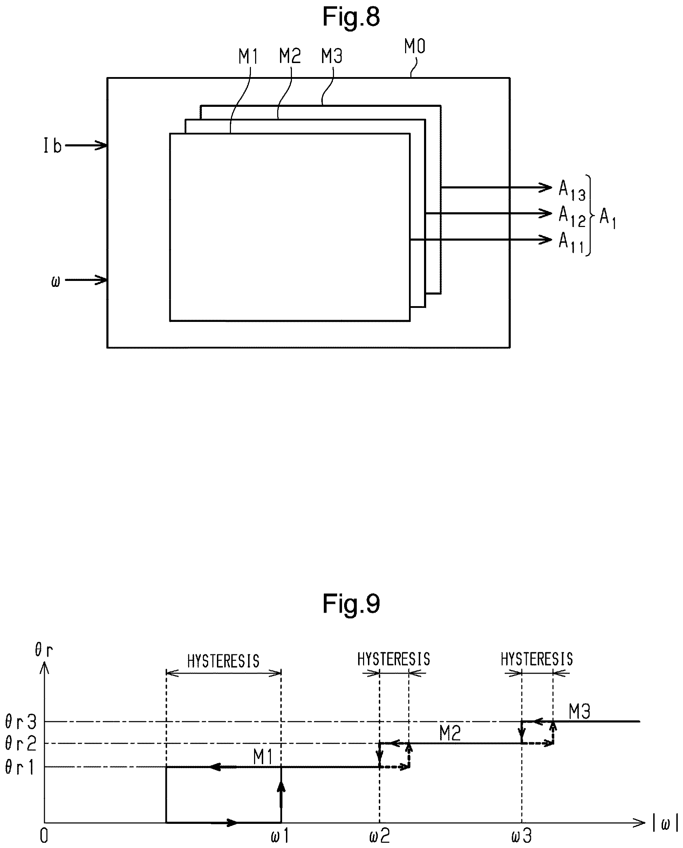

As shown in FIG. 8, the map M0 includes, for example, a first map M1, a second map M2, and a third map M3. The first to third maps M1 to M3 each define the relationship between the power supply current Ib and the error amplitude $A_1$. The first to third maps M1 to M3 have, for example, the following characteristics. That is, the absolute value of the error amplitude $A_1$ is maintained at a constant value regardless of the value of the power supply current Ib.

It should be noted that the absolute value of a first error amplitude $A_{11}$ obtained from the first map M1 is the largest, followed by the absolute value of a second error amplitude $A_{12}$ obtained from the second map M2, and then the absolute value of a third error amplitude $A_{13}$ obtained from the third map M3.

When the angular velocity $\omega$ is a value that belongs to a first angular velocity range, the microcomputer 42 computes the first error amplitude $A_{11}$ by using the first map M1, and computes a first correction angle $\theta r1$ by using the computed first error amplitude $A_{11}$. When the angular velocity $\omega$ is a value that belongs to a second angular velocity range, the microcomputer 42 computes the second error amplitude $A_{12}$ by using the second map M2, and computes a second correction angle $\theta r2$ by using the computed second error amplitude $A_{12}$. When the angular velocity $\omega$ is a value that belongs to a third angular velocity range, the microcomputer 42 computes the third error amplitude $A_{13}$ by using the third map M3, and computes a third correction angle $\theta r3$ by using the computed third error amplitude $A_{13}$.

It should be noted that the absolute value of the angular velocity $\omega$ that belongs to the first angular velocity range is the largest, followed by the absolute value of the angular velocity $\omega$ that belongs to the second angular velocity range, and then the absolute value of the angular velocity $\omega$ that belongs to the third angular velocity range. Each of the first to third maps M1 to M3 is tuned according to the angular velocity $\omega$ in a corresponding one of the angular velocity ranges.

In this way, a more appropriate error amplitude $A_1$ can be computed according to the angular velocity $\omega$ of the motor 20.

- When the microcomputer 42 changes the correction angle θr according to the angular velocity ω of the motor 20, the microcomputer 42 may cause the correction angle θr to exhibit hysteresis with respect to changes in the angular velocity ω of the motor.

For example, when the map M0 includes the first to third maps M3 shown in FIG. 8, the microcomputer 42 switches between the maps to be used according to the angular velocity ω of the motor 20. When the microcomputer 42 switches between the maps, the microcomputer 42 causes the correction angle θr to exhibit hysteresis with respect to changes in the angular velocity ω of the motor.

As shown in the graph of FIG. 9, for example, the range in which the absolute value of the angular velocity ω is greater than or equal to "0" and less than a first angular velocity threshold w1 is a dead zone. The dead zone is the range of the angular velocity ω in which the microcomputer 42 does not perform a correction process using the correction angle θr. The first angular velocity threshold w1 is greater than "0." When the absolute value of the angular velocity ω is a value that belongs to the dead zone, the microcomputer 42 sets the value of the correction angle θr to "0" regardless of the absolute value of the angular velocity ω.

When the absolute value of the angular velocity ω increases from "0" and the absolute value of the angular velocity ω reaches the first angular velocity threshold ω1, the microcomputer 42 computes a correction angle θr1 by using the first map M1, and corrects the rotation angle θ by using the computed correction angle θr1.

When the absolute value of the angular velocity ω further increases and exceeds a second angular velocity threshold ω2 by a predetermined value, the microcomputer 42 computes a correction angle θr2 by using the second map M2, and corrects the rotation angle θ by using the computed correction angle θr2. The second angular velocity threshold ω2 is greater than the first angular velocity threshold ω1.

When the absolute value of the angular velocity ω further increases and exceeds a third angular velocity threshold ω3 by a predetermined value, the microcomputer 42 computes a correction angle θr3 by using the third map M3, and corrects the rotation angle θ by using the computed correction angle θr3. The third angular velocity threshold ω3 is greater than the second angular velocity threshold ω2.

When the absolute value of the angular velocity ω decreases from a value exceeding the third angular velocity threshold ω3 to a value less than or equal to the third angular velocity threshold ω3, the microcomputer 42 computes a correction angle θr2 by using the second map M2, and corrects the rotation angle θ by using the computed correction angle θr2.

When the absolute value of the angular velocity ω further decreases from a value exceeding the second angular velocity threshold ω2 to a value less than or equal to the second angular velocity threshold ω2, the microcomputer 42 computes a correction angle θr1 by using the first map M1, and corrects the rotation angle θ by using the computed correction angle θr1.

When the absolute value of the angular velocity ω further decreases from a value exceeding the first angular velocity threshold ω1 to a predetermined value less than the first angular velocity threshold ω1, the microcomputer 42 stops performing the correction process for the rotation angle θ. That is, the microcomputer 42 sets the value of the correction angle θr to "0" regardless of the absolute value of the angular velocity ω.

As described above, the correction angle θr exhibits hysteresis characteristics with respect to changes in the angular velocity ω of the motor 20. This can reduce sudden changes in the correction angle θr, and therefore, in the corrected rotation angle θ. That is, when the absolute value of the angular velocity ω is a value close to the first angular velocity threshold ω1, the occurrence of events in which the correction angle θr repeatedly and finely switches between the first correction angle θr1 and "0" is reduced. When the absolute value of the angular velocity ω is a value close to the second angular velocity threshold ω2, the occurrence of events in which the correction angle θr repeatedly and finely switches between the first correction angle θr1 and the second correction angle θr2 is reduced. When the absolute value of the angular velocity ω is a value close to the third angular velocity threshold ω3, the occurrence of events in which the correction angle θr repeatedly and finely switches between the second correction angle θr2 and the third correction angle θr3 is reduced.

As the angular velocity ω of the motor 20 decreases, the impact of the angular error δ on, for example, the NV (Noise and Vibration) performance becomes negligible. Therefore, it is possible to adopt a configuration in which the correction of the rotation angle θ is not performed when the absolute value of the angular velocity ω is "0" or a value near "0" that belongs to the dead zone, as shown in the graph of FIG. 9. However, depending on the product specifications, the dead zone may not be provided.

- The error amplitude $A_1$ may depend on the rotational direction of the first magnetic flux φ1 generated by the bias magnet 31. Therefore, for example, the microcomputer 42 may determine the rotational direction of the motor 20 based on the angular velocity ω of the motor 20, and calculate the error amplitude $A_1$ by taking into account the determined rotational direction. For example, when the angular velocity ω of the motor 20 is a positive value, the rotational direction of the motor 20 is clockwise. When the angular velocity ω of the motor 20 is a negative value, the rotational direction of the motor 20 is counterclockwise. The map M0 includes, for example, a map for clockwise rotation and a map for counterclockwise rotation, and the microcomputer 42 switches between the maps to be used according to the rotational direction of the motor 20. The map for clockwise rotation and the map for counterclockwise rotation each define the relationship between the power supply current Ib and the error amplitude $A_1$. The map for clockwise rotation and the map for counterclockwise rotation are each tuned according to the rotational direction of the motor 20. In this way, a more appropriate error amplitude $A_1$ can be computed according to the rotational direction of the motor 20. Moreover, a more appropriate correction angle θr can be computed according to the rotational direction of the motor 20.

- The phase error $\theta_{M1}$ may depend on the rotational direction of the first magnetic flux φ1 generated by the bias magnet 31. Therefore, for example, the microcomputer 42 may determine the rotational direction of the motor 20 based on the angular velocity ω of the motor 20, and switch the phase error $\theta_{M1}$ to be used for the computation of the correction angle θr, according to the determined rotational direction. For example, when the angular velocity ω of the motor 20 is a positive value, the rotational direction of the motor 20 is clockwise. When the angular velocity ω of the motor 20 is a negative value, the rotational direction of the motor 20 is counterclockwise. A phase error $\theta_{M1}$ for clockwise rotation and a phase error $\theta_{M1}$ for counterclockwise rotation are stored in a storage device such as a memory. The microcomputer 42 sets the phase error $\theta_{M1}$ to be used for the computation of the correction angle θr, according to the rotational direction of the motor 20. When the rotational direction of the motor 20 is clockwise, the microcomputer 42 computes the correction angle θr by using the phase error $\theta_{M1}$ for clockwise rotation. When the rotational direction of the motor 20 is counterclockwise, the microcomputer 42 computes the correction angle θr by using the phase error $\theta_{M1}$ for counterclockwise rotation. In this way, a more appropriate correction angle θr can be computed according to the rotational direction of the motor 20.

- When the microcomputer 42 calculates the error amplitude $A_1$ by taking into account the rotational direction of the motor 20 determined based on the angular velocity ω, the microcomputer 42 may provide a dead zone for the absolute value of the angular velocity ω. The dead zone is the range of the angular velocity ω in which the microcomputer 42 does not perform the correction process using the correction angle θr. The dead zone is a certain range centered on "0" and includes "0." When the absolute value of the angular velocity ω is a value that belongs to the dead zone, the microcomputer 42 sets the value of the correction angle θr to "0" regardless of the absolute value of the angular velocity ω. In this way, chattering of the motor 20 can be addressed. Chattering is a phenomenon in which the absolute value of the angular velocity ω repeatedly and finely switches between positive and negative values near "0," that is, a phenomenon in which the rotational direction of the motor 20 switches repeatedly and finely.

- The magnetic sensor 32 may be a Hall sensor that uses a Hall element. - The motor 20 may include two winding groups. There may be two control systems for the motor 20 and two power supply systems for the motor 20. **In** this case, the cover 25 may include the same number of connector mating portions 25a as the number of systems, namely two connector mating portions 25a.

**Claims**

1. A rotation angle detection device configured to detect a rotation angle of a motor including an output shaft, the rotation angle detection device comprising:

   a magnet fixed to an end of the output shaft;
   a magnetic sensor provided so as to face the magnet in an axial direction of the output shaft, the magnetic sensor being configured to generate an electrical signal according to a change in a magnetic field caused by rotation of the magnet;
   a processing circuit configured to compute the rotation angle of the motor based on the electrical signal, and to control power supply to the motor according to the computed rotation angle of the motor;
   a circuit board on which the magnetic sensor and the processing circuit are mounted; and
   a terminal configured to supply electric power to the circuit board, wherein
   the processing circuit is configured to compute, as a correction angle for the rotation angle of the motor, an angular error caused by magnetic flux disturbance generated from the terminal when the electric power is supplied to the circuit board via the terminal, and to correct the rotation angle of the motor by using the computed correction angle.

2. The rotation angle detection device according to claim 1, wherein:

   the processing circuit is configured to compute the correction angle by utilizing a fact that the angular error is describable by a sine function; and
   when the correction angle is represented by "θr," the rotation angle of the motor is represented by "θ," an error amplitude is represented by "$A_1$," and a phase error with respect to the rotation angle of the motor is represented by "$\theta_{M1}$,"
the processing circuit is configured to compute the correction angle based on the following equation (1)

$$\theta r = A_1 \cdot \sin(\theta + \theta_{M1}) \; . \; . \; . \; (1).$$

3. The rotation angle detection device according to claim 2, wherein the phase error is an amount of phase shift determined by a structure of the motor.

4. The rotation angle detection device according to claim 2 or 3, wherein the processing circuit is configured to compute the error amplitude by using a map that defines a relationship between a current supplied to the circuit board via the terminal and the error amplitude.

5. The rotation angle detection device according to claim 4, wherein:

the terminal is configured to supply electric power from an external power supply to the circuit board;
the processing circuit is configured to convert a value of a phase current supplied to the motor to a d-axis current value and a q-axis current value in a d/q coordinate system by using the rotation angle of the motor, and to generate a d-axis voltage command value and a q-axis voltage command value by performing current feedback such that each of the d-axis current value and the q-axis current value follows a target value; and
when the current supplied to the circuit board is represented by "Ib," a voltage of the external power supply is represented by "Vb," the d-axis current value is represented by "Id," the q-axis current value is represented by "Iq," the d-axis voltage command value is represented by "Vd\*," and the q-axis voltage command value is represented by "Vq\*," the processing circuit is configured to compute the current supplied to the circuit board, based on the following equation (2)

$$Ib = (Vd^* \cdot Id + Vq^* \cdot Iq)/Vb \; . \; . \; . \; (2).$$

6. The rotation angle detection device according to any one of claims 1 to 3, wherein the processing circuit is configured to compute an angular velocity of the motor based on the rotation angle of the motor before correction, and to change the correction angle according to the computed angular velocity of the motor.

7. The rotation angle detection device according to claim 6, wherein the processing circuit is configured to, when the processing circuit changes the correction angle according to the angular velocity of the motor, cause the correction angle to exhibit hysteresis with respect to a change in the angular velocity of the motor.

8. The rotation angle detection device according to claim 4, wherein the processing circuit is configured to compute an angular velocity of the motor based on the rotation angle of the motor before correction, to determine a rotational direction of the motor based on a positive or negative sign of the computed angular velocity of the motor, to compute the error amplitude by taking into account the determined rotational direction of the motor, and to switch the phase error according to the determined rotational direction of the motor.

9. The rotation angle detection device according to claim 4, wherein the processing circuit is configured to compute an angular velocity of the motor based on the rotation angle of the motor before correction, and to change the correction angle according to the computed angular velocity of the motor.

10. The rotation angle detection device according to claim 5, wherein the processing circuit is configured to compute an angular velocity of the motor based on the rotation angle of the motor before correction, and to change the correction angle according to the computed angular velocity of the motor.

# Fig.1

# Fig.2

## Fig.3

EP 4 667 865 A1

# Fig.4

# Fig.5

# Fig.6

# Fig.7

## Fig.8

## Fig.9

## INTERNATIONAL SEARCH REPORT

| International application No. |
|---|
| **PCT/JP2023/004779** |

**A. CLASSIFICATION OF SUBJECT MATTER**

$G01B$ $7/30$(2006.01)i
FI: G01B7/30 M

According to International Patent Classification (IPC) or to both national classification and IPC

**B. FIELDS SEARCHED**

Minimum documentation searched (classification system followed by classification symbols)

G01B7/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-131446 A (NIDEC MOBILITY CORP.) 07 September 2022 (2022-09-07) paragraphs [0013]-[0043], fig. 1-6 | 1-4 |
| Y | | 5-6, 8-10 |
| A | | 7 |
| Y | JP 2016-119796 A (DENSO CORPORATION) 30 June 2016 (2016-06-30) paragraphs [0029]-[0030], [0038], fig. 1 | 5, 10 |
| Y | JP 2017-143603 A (JTEKT CORP.) 17 August 2017 (2017-08-17) paragraphs [0079]-[0086], fig. 9-10 | 6, 8-10 |
| Y | WO 2019/151200 A1 (NSK LTD.) 08 August 2019 (2019-08-08) paragraph [0074], fig. 24 | 6, 9-10 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004779**

| Patent document cited in search report | | | Publication date (day/month/year) | Patent family member(s) | | | Publication date (day/month/year) |
|---|---|---|---|---|---|---|---|
| JP | 2022-131446 | A | 07 September 2022 | CN 114977945 A paragraphs [0037]-[0071], fig. 1-6 | | | |
| JP | 2016-119796 | A | 30 June 2016 | US 2016/0181954 A1 paragraphs [0051]-[0053], [0067]-[0068], fig. 1 CN 105720882 A | | | |
| JP | 2017-143603 | A | 17 August 2017 | (Family: none) | | | |
| WO | 2019/151200 | A1 | 08 August 2019 | US 2020/0382032 A1 paragraph [0126], fig. 24 EP 3598632 A1 CN 110651425 A | | | |

Form PCT/ISA/210 (patent family annex) (January 2015)

**EP 4 667 865 A1**

## REFERENCES CITED IN THE DESCRIPTION

**Patent documents cited in the description**

- JP 2017143603 A